Europäisches Patentamt

European Patent Office

Office européen des brevets

(11) Numéro de publication : **0 091 864**
**B1**

(12) **FASCICULE DE BREVET EUROPÉEN**

(45) Date de publication du fascicule du brevet :
**20.08.86**

(51) Int. Cl.⁴ : **H 02 G   1/08**

(21) Numéro de dépôt : **83400688.4**

(22) Date de dépôt : **01.04.83**

(54) **Dispositif de mise en place d'un câble à l'intérieur d'un conduit.**

(30) Priorité : **08.04.82 FR 8206121**

(43) Date de publication de la demande :
**19.10.83 Bulletin 83/42**

(45) Mention de la délivrance du brevet :
**20.08.86 Bulletin 86/34**

(84) Etats contractants désignés :
**AT BE CH DE FR GB IT LI LU NL SE**

(56) Documents cités :
**EP-A- 0 017 616**
**CH-A-   460 896**
**DE-B- 1 153 810**
**DE-C-   617 657**

(73) Titulaire : **JEUMONT-SCHNEIDER Société anonyme dite:**
**31-32, Quai de Dion Bouton**
**F-92811 Puteaux Cedex (FR)**

(72) Inventeur : **Le Comte, Michel**
**6bis, rue des Closeaux**
**F-91440 Bures sur Yvette (FR)**

(74) Mandataire : **Lejet, Christian**
**Société JEUMONT-SCHNEIDER 31-32, Quai de Dion Bouton**
**F-92811 Puteaux Cedex (FR)**

Jouve, 18, rue St-Denis, 75001 Paris, France

## Description

La présente invention concerne un dispositif de mise en place d'un câble de longueur importante, à l'intérieur d'un conduit, et au moyen d'un fil tracteur tel que selon le préambule de la revendication 1. On sait que suivant la technique connue une telle opération s'effectue par traction sur l'extrémité libre du câble au moyen d'un fil tracteur préalablement introduit dans le conduit. Ce câble est alors déroulé du touret sur lequel il est enroulé au fur et à mesure de la progression à l'intérieur du conduit.

Cette manière de procéder a l'inconvénient d'avoir une portée limitée par la résistance à la traction du câble, résistance qui doit vaincre celle constituée par le frottement croissant de ce dernier contre la paroi du conduit.

Les brevets EP-A-0 017 616 et DE-C-617 657 décrivent des procédés qui permettent d'obvier à cet inconvénient. Ces brevets décrivent tous deux un procédé de mise en place d'un câble à l'intérieur d'un conduit qui consiste à fixer le câble sur toute sa longueur à un câble tendeur en des points espacés les uns des autres, et avec un peu de mou sur le câble, pour que chaque fraction du câble ne subisse aucune des contraintes de la fraction qui la précède et de façon à répartir l'effort de traction sur les fractions successives du câble au cours de la mise en place de ce dernier.

Mais ces deux procédés présentent un inconvénient majeur. En effet, le câble tendeur et les moyens de fixation du câble au câble tendeur doivent être abandonnés dans le conduit après la mise en place du câble.

Le brevet DE-B-1 153 810 décrit un dispositif qui ne présente pas cet inconvénient. En effet, ce dispositif comprend des moyens de fixation mécaniques enserrant le fil tracteur, tels qu'un collier de serrage, pourvu de deux éléments formant mâchoires, entre lesquels peut être engagé le câble à tracter. Ces mâchoires se ferment sur le câble lorsque le fil tracteur est tiré et elles s'ouvrent dès qu'il n'est plus tiré, ce qui permet de retirer le fil tracteur et les moyens de fixation après la mise en place du câble. Cependant, ce système de commande des mâchoires présente l'inconvénient de dépendre de la commande du fil tracteur et d'éventuelles fausses manœuvres.

L'invention a pour objet un dispositif qui permet de remédier à cet inconvénient. Selon ce dispositif, l'un au moins des éléments formant mâchoires est articulé et disposé de manière à agir dans un plan perpendiculaire à l'axe du câble à tracter. Il peut être télécommandé par des moyens indépendants du fil tracteur de façon à serrer ou libérer le câble à tracter suivant l'effet requis, les moyens de fixation étant prévus pour être ôtés du conduit après la mise en place du câble.

On comprendra mieux les caractéristiques et avantages de l'invention en se référant à la description suivante et au dessin annexé donnant à titre non limitatif une forme de réalisation de l'invention.

La figure 1 qui illustre le procédé suivant l'invention représente sous forme schématique, en coupe, un conduit, et, à l'intérieur de celui-ci un câble ainsi que son fil tracteur pourvu de moyens mécaniques de fixation permettant de relier le câble au fil tracteur de points en points, de manière à permettre d'effectuer la mise en place du câble par tractions successives.

La figure 2 représente en vue perspective partielle éclatée, agrandie, un moyen de fixation, tel qu'un collier de serrage dans cet exemple, prévu pour relier le câble au fil tracteur.

La figure 3 est une vue en coupe du moyen de fixation mécanique représenté sur la figure 2 après assemblage.

La figure 4 est une vue en coupe suivant IV-IV de la figure 3.

La figure 5 représente schématiquement le moyen mécanique de fixation en positions d'ouverture et de fermeture.

Les figures 6 et 7 représentent une variante de réalisation du dispositif de fixation.

La figure 8 représente schématiquement un moyen de commande magnétique appliqué au dispositif de l'invention.

Les éléments communs à ces figures sont désignés par les mêmes références.

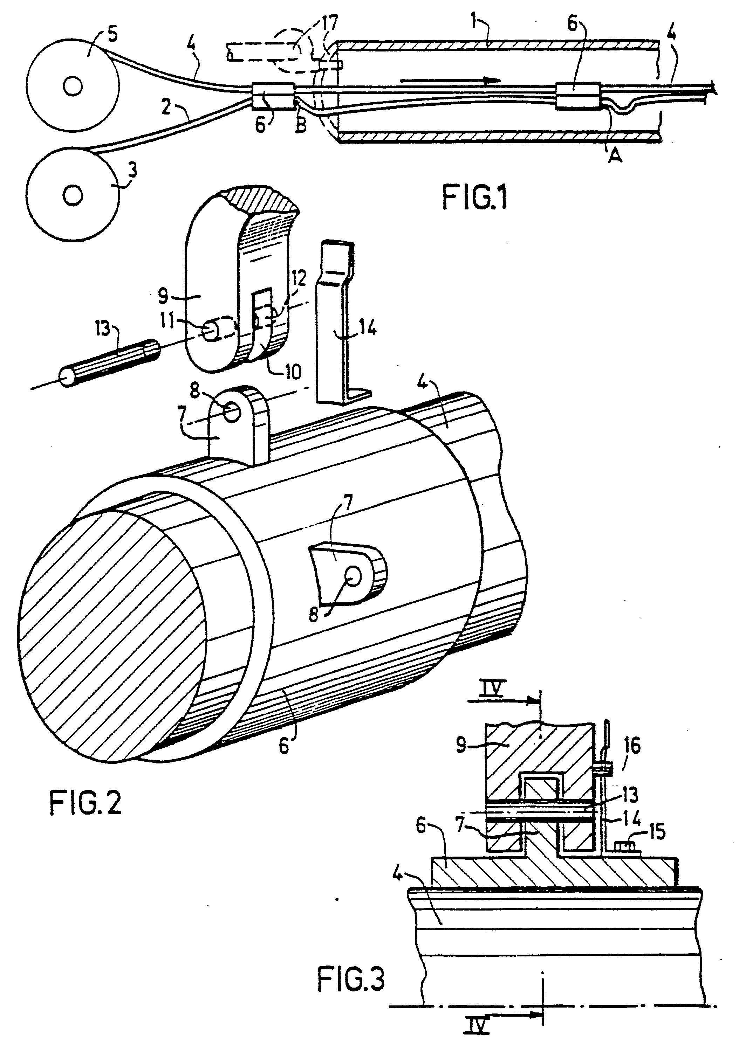

Sur la figure 1, la référence 1 désigne le conduit à l'intérieur duquel est effectuée, dans le sens indiqué par la flèche, la mise en place du câble 2, par tractions, au moyen d'un fil tracteur 4.

Il est précisé que le fil tracteur est préalablement introduit par son extrémité libre dans le conduit 1 qu'il traverse en son entier. Ensuite, au fur et à mesure du déroulement du câble 2 de son touret 3 et de celui du fil 4 de son touret 5, en amont de l'entrée du conduit 1, le câble 2 est fixé au fil tracteur 4 au moyen de dispositifs d'accouplement 6, en des points A, B... dont l'espacement est déterminé en fonction de la résistance offerte à la traction par la portion de câble ainsi définie, et avec un peu de mou sur le câble, de telle sorte que chaque fraction dudit câble ne subisse aucune des contraintes de la fraction qui la précède.

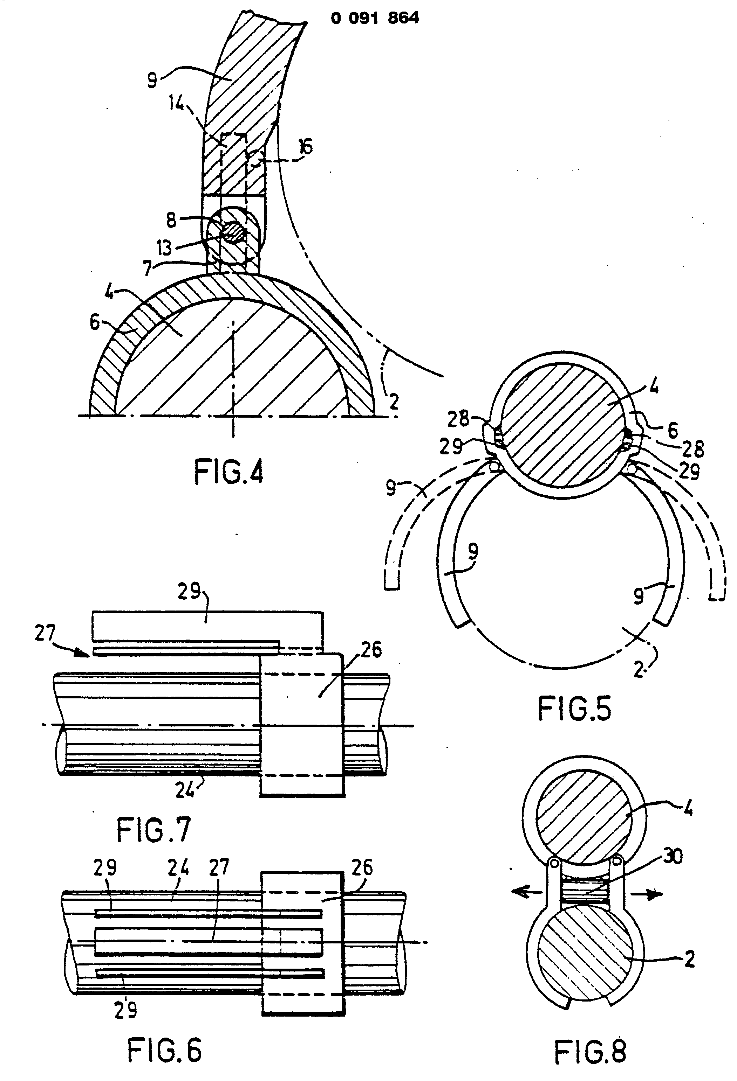

La figure 2 représente en vue perspective éclatée, sous forme schématique simplifiée et à titre d'exemple, un dispositif d'accouplement mécanique du câble 2 au fil tracteur 4, tandis que les figures 3 et 4 sont des vues partielles en coupe du dispositif de la figure 2 après assemblage.

Dans l'exemple de réalisation représenté sur les figures 2 à 4, le dispositif de fixation du câble 2 comprend un collier de serrage 6 solidaire du fil tracteur 4 et pourvu de deux éléments formant mâchoires. Chacun de ces éléments est constitué par une première pièce 7 solidaire du collier 6, en forme d'oreille, dans laquelle est pratiqué un orifice 8, et par une seconde pièce 9 de forme générale arquée, dont une des extrémités est en forme d'étrier 10 dans lequel sont pratiqués des orifices 11 et 12.

Chacune des oreilles 7 est prévue pour être engagée dans un étrier 10 correspondant. Un pivot 13 disposé parallèlement à l'axe du fil tracteur 4 et passant par les orifices 11, 8 et 12 relie les pièces 7 et 9 de manière à permettre à cette dernière d'effectuer le mouvement de rotation requis, le blocage entre elles des pièces 7 et 9-10, en position fermée étant obtenu par un moyen tel qu'une lame 14 solidaire du collier 6 coopérant avec un moyen tel qu'une butée 16 solidaire de la pièce pivotante 9.

L'axe 13 peut être lui-même bloqué en translation par tout moyen connu. Il peut ainsi à cet effet être pourvu à l'une de ses extrémités d'une tête et à l'autre extrémité d'une goupille ou d'une gorge associée à un doigt à ressort fixé sur l'étrier 10.

Les pièces 9 prévues pour enserrer le câble 2 au cours de sa mise en place dans le conduit, et dont une seule peut être articulée, comme il a déjà été indiqué, ont une forme générale arquée, avec un rayon de courbure voisin de celui du câble de façon à en épouser la forme donc à améliorer la tenue mécanique ; leur surface en contact avec le câble peut être striée transversalement à l'axe du câble, de préférence, pour augmenter la prise.

Tandis que les figures 2 à 4 représentent partiellement une seule des deux pièces 9, la figure 5 représente les deux pièces 9 en position de serrage sur le câble 2 (traits pleins) et en position autorisant la libération du dit câble (traits interrompus).

La télécommande de l'ouverture ou de la fermeture des mâchoires étant commune à toutes celles-ci, de manière préférentielle pour limiter le nombre des fils de télécommande, il est nécessaire de pouvoir ouvrir et refermer celle qui arrive à l'entrée du conduit à un instant donné. A cet effet, dans l'exemple représenté, une mâchoire peut être ouverte manuellement en écartant la lame souple 14 fixée en 15 au collier 6.

La butée 16 solidaire de l'élément de mâchoire correspondant 9 passe en dessous. Une fois le câble mis en place, on referme la mâchoire et on laisse retomber la lame 14 qui reprend sa position initiale.

L'ouverture télécommandée de la mâchoire par action sur l'une ou sur les deux pièces 9 peut être obtenue par tout moyen approprié permettant de déterminer un déplacement mécanique.

A titre d'exemple, on peut citer parmi ces moyens :

la commande par effet magnétique exerçant une force sur la mâchoire de manière à la faire pivoter en position d'ouverture.

Cette disposition permet de supprimer la butée.

la commande par effet magnétique agissant sur un matériau perdant brutalement ses propriétés magnétiques au-dessus d'une certaine température : point de Curie. De l'énergie potentielle emmagasinée localement (dans un ressort, un aimant permanent non affecté par la température, etc...) fait basculer la mâchoire en position d'ouverture dès que le premier matériau (à point de Curie) ne s'oppose plus à l'action de l'énergie potentielle stockée, tel que représenté sur la figure 8 où l'aimant 30 est du type permanent.

la commande par effet thermique : la mâchoire est constituée à cet effet par un ou deux bilames prévus pour être chauffés électriquement sous l'effet d'un courant amené par des moyens conducteurs développés le long du câble tracteur, qui peuvent agir sur l'un aussi bien que sur les deux bilames. Ces conducteurs portent les références 28 et 29 sur la figure 5.

Dans l'exemple représenté sur les figures 2, 3, 4, les éléments formant mâchoires sont disposés de façon à agir dans un plan perpendiculaire à l'axe du câble.

Suivant une autre disposition représentée sur les figures 6 et 7, les éléments formant mâchoires peuvent être placés sur le collier de manière à agir dans un plan parallèle à l'axe du câble. Dans ce cas, ces éléments désignés par la référence 29 sont disposés sur le collier 26 longitudinalement dans le sens de l'axe du fil tracteur 24.

Pour favoriser l'éjection du câble hors de la mâchoire, il est prévu un ressort tel que 27, à volonté télécommandé ou non, qui agit de façon à écarter le câble du fil lorsqu'on ouvre la mâchoire. Ce ressort peut être constitué comme l'un des éléments 29 et donc être télécommandé en même temps que l'ouverture de celui-ci (bilame, etc...).

Il peut aussi être passif et agir en permanence, son action étant sans effet tant que les mâchoires sont serrées.

Un dispositif mécanique peut également être prévu pour débrayer l'action d'écartement du câble lors de la mise en place de ce dernier dans la mâchoire.

Comme il a été indiqué ci-dessus, pour favoriser l'avancement du câble et en réduire le frottement contre la paroi du conduit, un fluide peut être injecté à grande vitesse dans le dit conduit, tel que représenté en 17 sur la figure 1.

**Revendications**

1. Dispositif de mise en place d'un câble, de longueur importante, à l'intérieur d'un conduit et au moyen d'un fil tracteur, le câble (2) étant fixé sur toute sa longueur au fil tracteur (4), en des points dont l'espacement est déterminé en fonction de la résistance offerte à la traction par la portion de câble ainsi déterminée, pour que chaque fraction dudit câble ne subisse aucune des contraintes de la fraction qui la précède, et de façon à répartir l'effort de traction sur les fractions successives du câble au cours de la mise en place de ce dernier, ledit dispositif comprenant des moyens de fixation mécaniques enserrant le fil tracteur (4), tels qu'un collier de serrage (6), pourvu de deux éléments formant mâchoires, entre lesquels peut être engagé le câble à tracter (2), caractérisé en ce que l'un au moins desdits éléments étant articulé et disposé de manière à agir dans un plan perpendiculaire à l'axe du câble (2), il peut être télécommandé par des moyens indépendants du fil tracteur, de façon à serrer ou libérer le câble à tracter (2) suivant l'effet requis, lesdits moyens de fixation étant prévus pour être ôtés dudit conduit (1) après la mise en place dudit câble (2).

2. Dispositif selon la revendication 1, caractérisé en ce que l'élément de mâchoire articulé est formé d'une première pièce fixe (7) solidaire du collier (6) et d'une seconde pièce (9) en forme d'étrier montée pivotante sur ladite première pièce (7) au moyen d'un axe (13) parallèle à l'axe du fil tracteur, le blocage desdites pièces entre elles étant obtenu, en position fermée, par un moyen tel qu'une lame (14) solidaire du collier (6) et par un moyen tel qu'une butée (16) solidaire de la pièce pivotante (9).

3. Dispositif selon la revendication 1, caractérisé en ce que l'élément de mâchoire articulé est constitué par un bilame chauffé sous l'effet d'un courant électrique amené au moyen du fil tracteur (4) ou par des fils conducteurs prévus à cet effet le long de ce dernier, ledit élément étant alors télécommandé par effet thermique.

4. Dispositif selon la revendication 1, caractérisé en ce que les éléments de mâchoires sont télécommandés par effet magnétique, au moyen de la variation d'un champ magnétique déterminant l'ouverture desdites mâchoires.

5. Dispositif selon la revendication 4, caractérisé en ce que la variation dudit champ magnétique résulte du passage de part et d'autre du point de Curie, d'un matériau constitutif des mâchoires.

**Claims**

1. Device for laying a cable of considerable length within a conduit by means of a traction wire, the cable (2) being fixed over its entire length to the traction wire (4), at points whose spacing is determined in accordance with the resistance presented to the tractive force by the portion of cable thus determined, so that each part of the said cable is subjected to none of the stresses of the part which precedes it, and such as to distribute the tractive force over the successive parts of the cable during the laying of the cable, the said device comprising mechanical fixing means gripping around the traction wire (4), such as a clamping collar (6), provided with two elements forming jaws between which the cable (2) to be drawn may be engaged, characterised in that one at least of the said elements being pivoted and arranged in such a manner as to act in a plane perpendicular to the axis of the cable (2), it may be remote controlled by means independent of the traction wire, so as to grip or release the cable (2) to be drawn according to the force required, the said fixing means being adapted to be removed from the said conduit (1) after said cable (2) has been laid.

2. Device according to claim 1, characterised in that the pivoted jaw element is formed of a first fixed part (7) integral with the collar (6) and a second part (9) in the form of a stirrup mounted pivotably on the said first part (7) by means of a pivot pin (13) parallel to the axis of the traction wire, the locking of the said parts to one another being obtained, in the closed position, by a means such as a blade (14) integral with the collar (6) and by a means such as a stop (16) integral with the pivotable part (9).

3. Device according to claim 1, characterised in that the pivoted jaw element is constituted by a bimetallic strip heated by the action of an electrical current supplied by means of the traction wire (4) or by conductive wires provided for this purpose along said traction wire, the said element being then remote controlled by thermal effect.

4. Device according to claim 1, characterised in that the jaw elements are remote controlled by magnetic action, through the variation of a magnetic field determining the opening of the said jaws.

5. Device according to claim 4, characterised in that the variation of the said magnetic field results from a material constituting the jaws passing through the Curie point to either side.

**Patentansprüche**

1. Vorrichtung zum Verlegen eines Kabels großer Länge im Inneren eines Rohres mittels eines Zugdrahtes, wobei das Kabel (2) über seine gesamte Länge an dem Zugdraht (4) an Punkten befestigt ist, deren Beabstandung in Abhängigkeit von dem Widerstand bestimmt ist, den der so bestimmte Kabelteil dem Zug entgegensetzt, damit jeder Kabelabschnitt keinerlei Beanspruchungen aus dem vorausgehenden Abschnitt ausgesetzt ist, sowie dergestalt, daß die Zugbeanspruchung auf die aufeinanderfolgenden Kabelabschnitte im Verlauf der Verlegung dieses Kabels verteilt wird, wobei die genannte Vorrichtung mechanische Befestigungsmittel umfaßt, welche den Zugdraht (4) umspannen, wie ein Spannring (6), der mit zwei Backenelementen versehen ist, zwischen denen das einzuziehende Kabel (2) erfaßt werden kann, dadurch gekennzeichnet, daß wenigstens eines der genannten Elemente gelenkig angeschlossen sowie derart angeordnet ist, daß es in einer zur Achse des Kabels (2) senkrechten Ebene wirkt, und ferngesteuert werden kann durch von dem Zugdraht unabhängige Mittel, um das einzuziehende Kabel (2) je nach der erforderlichen Wirkung einzuspannen oder freizugeben, wobei die genannten Befestigungsmittel von solcher Art vorgesehen sind, daß sie aus dem genannten Rohr (1) nach der Verlegung des genannten Kabels (2) entfernt werden können.

2. Vorrichtung nach Anspruch 1, dadurch gekennzeichnet, daß das gelenkig angeschlossene Backenelement aus einem ersten festen und fest

mit dem Ring (6) verbundenen Teil (7) und einem zweiten, bügelförmigen Teil (9) gebildet ist, welches schwenkbar an dem genannten ersten Teil (7) mittels einer Achse (13) angeschlossen ist, welche parallel zur Achse des Zugdrahtes ist, wobei die Blockierung der genannten Teile untereinander in geschlossener Stellung durch ein Mittel wie eine mit dem Ring (6) fest verbundene Lasche (14) und durch ein Mittel wie ein mit dem schwenkbaren Teil (9) fest verbundener Anschlag (16) erhalten wird.

3. Vorrichtung nach Anspruch 1, dadurch gekennzeichnet, daß das gelenkig angeschlossene Backenelement aus einem Bimetallstreifen besteht, der unter der Wirkung eines elektrischen Stromes erhitzt wird, welcher über den Zugdraht (4) oder über zu diesem Zweck längs desselben vorgesehene Drähte zugeführt wird, wobei das genannte Element dann durch thermischen Effekt ferngesteuert wird.

4. Vorrichtung nach Anspruch 1, dadurch gekennzeichnet, daß die Backenelemente durch magnetischen Effekt über die Änderung eines Magnetfeldes, welches die Öffnung der genannten Backen bestimmt, ferngesteuert sind.

5. Vorrichtung nach Anspruch 4, dadurch gekennzeichnet, daß die Änderung des Magnetfeldes daraus resultiert, daß ein die Backen bildendes Material einen Übergang beiderseits des Curiepunktes erfährt.

0 091 864

FIG.1

FIG.2

FIG.3

FIG.4

FIG.5

FIG.7

FIG.6

FIG.8